# EUROPÄISCHE PATENTSCHRIFT

(11) **EP 1 801 456 B1**
(45) Veröffentlichungstag und Bekanntmachung des Hinweises auf die Patenterteilung: **23.09.2009**
(21) Anmeldenummer: 06026220.1
(22) Anmeldetag: 18.12.2006
(51) Int. Cl.: F16H 7/08, F16H 7/12

(54) **Kettenspanneinrichtung für einen Verbrennungsmotor**
Chain tensioner for an internal combustion engine
Tendeur de chaîne pour un moteur à combustion interne

(30) Priorität: 22.12.2005 DE 102005061444
(43) Veröffentlichungstag der Anmeldung: 27.06.2007
(73) Patentinhaber: GM Global Technology Operations, Inc., Detroit, MI 48265-3000 (US)
(72) Erfinder: Zimmermann, Jan, 55130 Mainz (DE)
(74) Vertreter: Strauss, Peter

(56) Entgegenhaltungen:
- DE-A1- 4 023 728
- US-A1- 5 993 339

## Beschreibung

Die Erfindung betrifft eine Kettenspanneinrichtung für die Steuerkette eines Verbrennungsmotors, entsprechend dem Oberbegriff der Ansprüche 1-3.

Eine solche Kettenspanneinrichtung ist aus der US 6 435 993 B1 bekannt. Sie weist ein Zylindergehäuse mit einem Zylinder zur Aufnahme eines Dämpfungskolbens auf. Zwischen einer Seite des Dämpfungskolbens und dem Zylindergehäuse ist dabei eine Spannfeder vorgesehen. Das Zylindergehäuse hat eine Ölzufuhrbohrung zur Verbindung mit einem Druckölanschluss des Verbrennungsmotors. Diese Kettenspanneinrichtung hat einen komplizierten Aufbau.

Die EP 0 867 636 B1 zeigt einen hydraulischen Spanner mit einer Nut in der Vorratsabdeckung. Diese Kettenspanneinrichtung hat sich wegen des komplizierten Aufbaus und der aufwändigen Herstellung der Vorratsabdeckung nicht bewährt.

Die DE 25 25 352 zeigt einen hydraulischen Kettenspanner, der eine Spritzdüse zur Schmierung der Steuerkette aufweist. Bei diesem Kettenspanner ist von Nachteil, dass je nach Betriebszustand des Motors unzutreffende Kettenspannungen vorliegen.

Aus der DE 40 23 728 A1 ist ein Kettenspanner bekannt, bei dem ein Hydraulikkolben von beiden Seiten zur Dämpfung mit einem Hydraulikdruck beaufschlagt wird, wobei als Hydraulikflüssigkeit Motoröl eingesetzt wird, das über einen radialen Zuführkanal zu einer äußeren Ringfläche des Kolbens, durch verschiedene Nuten in einen zentralen Hohlraum des Kolbens und von dort in einen Rücklauf geführt wird.

Die US 5 993 339 zeigt einen gattungsgemäßen Kettenspanner, bei dem der Dämpfungskolben zwei Kolbenstangen aufweist, die auf die Außenseite des Zylindergehäuses ragen. Bei diesem Kettenspanner stehen die beiden vom Dämpfungskolben voneinander getrennten Seiten des Zylindergehäuses hydraulisch derart miteinander in Verbindung, dass an der Ölzuführbohrung anliegender Druck auf beide Seiten des Dämpfungskolbens einwirkt. Bei diesem Kettenspanner weisen die damit hergestellte Verbrennungsmotoren im Betrieb gelegentlich unzutreffende Dämpfungs- und Vorspannungseigenschaften auf.

Die Erfindung geht von der Aufgabe aus, einen stets zuverlässig arbeitenden Kettenspanner für die Steuerkette eines Verbrennungsmotors bereitzustellen.

Diese Aufgabe wird durch den Gegenstand der unabhängigen Patentansprüche gelöst. Vorteilhafte Weiterbildungen ergeben sich aus den jeweiligen abhängigen Patentansprüchen.

Gemäß einer der Erfindung zugrunde liegenden Erkenntnis werden die beiden vom Dämpfungskolben voneinander getrennten Seiten des Zylindergehäuses hydraulisch über einen Verbindungskanal miteinander in Verbindung gebracht. Dieser Verbindungskanal verläuft vorteilhafterweise im Zylindergehäuse oder im Dämpfungskolben. Dies hat sich besonders im Zusammenhang mit Zylindergehäusen und Dämpfungskolben bewährt, die mit einem Aluminiumdruckgussverfahren hergestellt worden sind. Bei diesen Bauteilen lässt sich der Verbindungskanal mit sehr wenig Aufwand in die zur Herstellung vorgesehene Gussform einformen, wobei durch die Gestaltung des Kanals maßgeblich Einfluss auf die Dämpfungswirkung des Dämpfungskolbens im Zylindergehäuse Einfluss genommen werden kann.

In einer besonders einfachen Ausführungsform ist der Verbindungskanal als Durchbruch in einem Kolbenboden des Dämpfungskolbens ausgebildet. Dabei können auch mehrere solche Durchbrüche im Kolbenboden vorgesehen sein, wobei einer oder mehrere der Durchbrüche mit einem Verschlusselement verschließbar ist. Eine solche Kettenspanneinrichtung kann durch einfache Versuche besonders genau an vorgegebene Bedingungen angepasst werden. So genügt es, ein vorgegebenes Paar von Zylindergehäuse und Dämpfungskolben mit einem oder wenigen Versuchen aufeinander abzustimmen. Hierzu wird das Zylindergehäuse mit Öl gefüllt, der Dämpfungskolben in das Zylindergehäuse eingesetzt und die Zeit gemessen, die der Dämpfungskolben benötigt, um bis zum Grund des Zylindergehäuses abzusinken. Ein Versuch wird unter standardisierten Bedingungen hinsichtlich der Temperatur durchgeführt. Je nach der benötigten Zeit für das vollständige Absinken werden einer oder mehrere der Durchbrüche mit einem Kunststoffstopfen oder einem anderen geeigneten Verschlusselement verschlossen. Auf diese Weise lassen sich Fertigungstoleranzen, die bei der Herstellung des Zylindergehäuses und des Dämpfungskolbens auftreten, auf einfache Weise ausgleichen.

In einer alternativen Ausführungsform ist wenigstens ein Verbindungskanal vorgesehen, wobei wenigstens ein Verbindungskanal einen Verschlusssteg aufweist. Gerade bei mit Aluminiumdruckgussverfahren hergestellten Zylindergehäusen bzw. Dämpfungskolben lassen sich solche Verschlussstege leicht entfernen, um gegebenenfalls eine gewünschte Dämpfung zu erreichen.

Zum Verstellen der Dämpfung des Dämpfungskolbens im Zylindergehäuse ist in einer alternativen Ausführungsform im Bereich eines Verbindungskanals ein betätigbares Verschlusselement vorgesehen. Mit einem solchen betätigbaren Verschlusselement kann die Dämpfung des Dämpfungskolbens auf einfache Weise verstellt werden. Hierzu wird das Verschlusselement so betätigt, dass es einen Verbindungskanal schließt. Dadurch wird die Dämpfung des Kolbens vergrößert, denn das Ölvolumen von einer Seite des durch den Dämpfungskolben aufgetrennten Zylindergehäuses muss nun durch eine kleinere Öffnung auf die andere Seite des Zylindergehäuses gelangen. Wenn mehrere Verbindungskanäle vorgesehen sind, dann kann auch nur einer oder auch mehrere der Verbindungskanäle mit jeweils einem betätigbaren Verschlusselement verschlossen werden, wenn dies für notwendig erachtet wird.

Ein solches Verschlusselement kann als Magnetventil ausgebildet sein, was eine elektrische und damit automatische Betätigung ermöglicht. Damit kann auf verschiedene Lastsituationen des Verbrennungsmotors und insbesondere auch auf Viskositätsänderungen des Drucköls reagiert werden, wenn sich diese im Betrieb ändern. Besonders für Verbrennungsmotoren im Versuchsstadium haben sich manuell betätigbare Verschlussschrauben oder andere geeignete manuell betätigbare Verschlusselemente bewährt. Mit solchen Kettenspanneinrichtungen kann nämlich Größe, Geometrie und andere Randbedingungen für in der Praxis benötigte Kettenspanneinrichtungen ermittelt werden. Im Stand der Technik war es notwendig, hierfür verschiedene Kettenspanner bereitzustellen oder sich auf Erfahrungswerte zu verlassen.

Der Verbindungskanal kann auch auf der äußeren Mantelfläche des Dämpfungskolbens von einer Stirnfläche zur anderen Stirnfläche verlaufen und dabei als Axialkanal ausgebildet sein. Ein solcher Axialkanal verläuft nicht notwendigerweise stets parallel zur Mittelachse des Dämpfungskolbens, vielmehr kann er auch teilweise radiale Abschnitte aufweisen. Mit einem solchen auf der Außenseite des Dämpfungskolbens verlaufenden Verbindungskanal lässt sich die Dämpfung besonders einfach herstellen, denn solche Verbindungskanäle können einfach in der zur Herstellung des Dämpfungskolbens verwendeten Gussform vorgesehen werden.

Abweichend davon kann der Verbindungskanal auch als auf der inneren Mantelfläche des Zylindergehäuses verlaufender Axialkanal ausgebildet sein. Ein solcher Verbindungskanal lässt sich besonders einfach herstellen, denn er wird üblicherweise als Erhöhung auf dem Gusskern vorgesehen, der den Zylinder für den Dämpfungskolben bereitstellt.

Bei allen den vorstehend genannten Ausführungsformen für einen Verbindungskanal wird dabei abweichend von der Gestaltung in der US 5 993 339 eine sehr knapp bemessene Spielpassung oder Übergangspassung zwischen Dämpfungskolben und Zylindergehäuse vorgesehen, so dass die Ölströmung zwischen dem Dämpfungskolben und dem Zylindergehäuse im Vergleich zu der Ölströmung durch den Verbindungskanal bzw. durch die Verbindungskanäle gering ist.

In einer besonders vorteilhaften Ausführungsform kann der Verbindungskanal als auf einer Montagefläche des Zylindergehäuses verlaufender Axialkanal ausgebildet sein. Eine solche Montagefläche ist zum Kontakt mit einem Teilbereich des Verbrennungsmotors bestimmt, denn solche Kettenspanneinrichtungen werden regelmäßig entweder am Zylinderkopf oder am Motorgehäuse eines Verbrennungsmotors vorgesehen. Die für das Vorsehen der Kettenspanneinrichtung vorgesehene Fläche ist normalerweise bearbeitet, so dass ein an dieser Stelle vorgesehener Verbindungskanal am Zylindergehäuse hinsichtlich seines Querschnitts besonders genau innerhalb vorgegebener Toleranzen gehalten werden kann.

Durch die vorstehenden Maßnahmen ergibt sich eine sehr genau einstellbare Dämpfung des Dämpfungskolbens, wodurch sich eine besonders große Laufruhe des Verbrennungsmotors erreichen lässt.

Im Bereich der Ölzuführbohrung kann dabei ein Rückschlagventil vorgesehen sein. Dadurch wird verhindert, dass von der Steuerkette erzeugte Schwingungen über die Kettenspanneinrichtungen auf den Öldruckkreislauf des Verbrennungsmotors rückwirken. Außerdem bewirkt ein solches Rückschlagventil eine zusätzliche Dämpfung des zum Zylindergehäuse zugeführten Drucköls, was die Laufruhe der erfindungsgemäßen Kettenspanneinrichtung erhöht.

Die Erfindung betrifft auch einen Verbrennungsmotor mit einer solchen Kettenspanneinrichtung, die auf eine Steuerkette einwirkt. Hierzu sind an dem Dämpfungskolben beispielsweise über eine Kolbenstange Rollen vorgesehen, die auf die Steuerkette einwirken.

Schließlich betrifft die Erfindung auch ein Kraftfahrzeug mit einem solchen Verbrennungsmotor.

Die Erfindung ist in der Zeichnung anhand eines Ausführungsbeispiels näher veranschaulicht.
- Figur 1: zeigt einen erfindungsgemäßen Kettenspanner im Querschnitt,
- Figur 2: zeigt ein Detail einer Innenseite eines Zylindergehäuses des Kettenspanners aus Figur 1,
- Figur 3: zeigt eine Verschlussschraube für einen Verbindungskanal des Kettenspanners aus Figur 1,
- Figur 4: zeigt eine Draufsicht auf einen Dämpfungskolben des Kettenspanners aus Figur 1,
- Figur 5: zeigt ein Verschlusselement für den Verbindungskolben aus Figur 4 und
- Figur 6: zeigt einen Querschnitt durch eine weitere erfindungsgemäße Kettenspanneinrichtung.

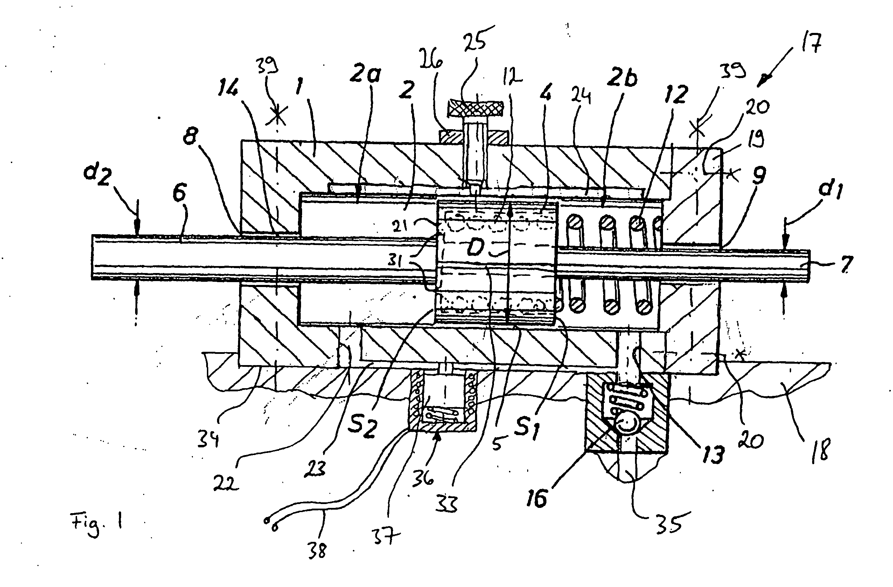

Figur 1 zeigt einen Querschnitt durch einen erfindungsgemäßen Kettenspanner 17, der an einem Gehäuseteil 18 eines in dieser Ansicht nicht gezeigten Verbrennungsmotors montiert ist.

Der Kettenspanner 17 gliedert sich in ein Zylindergehäuse 1, das eine Zylinderbohrung 2 aufweist. Die Zylinderbohrung 2 wird von einem Verschlussdeckel 19 verschlossen, der mit Verschlussschrauben 20 am Zylindergehäuse 1 befestigt ist. Im Inneren des Zylindergehäuses 1 ist ein Dämpfungskolben 4 aufgenommen, der die Zylinderbohrung 2 in zwei voneinander getrennte Abschnitte 2a und 2b mit jeweils variablem Volumen aufteilt. Der Dämpfungskolben 4 weist einen Kolbenboden 21 auf, der in Figur 1 mit einer Strichlinie angedeutet ist. Zwischen dem Verschlussdeckel 19 und dem Kolbenboden 21 verläuft eine Spannfeder 12, die als aus Federstahl hergestellte Spiralfeder ausgebildet ist.

Von der in Figur 1 links gelegenen Seite des Kolbenbodens 21 erstreckt sich eine erste Kolbenstange 6 durch eine erste Gehäuseöffnung 8 hindurch. Die erste Kolbenstange 6 hat einen Durchmesser d2. Zwischen der ersten Kolbenstange 6 und der ersten Gehäuseöffnung 8 ist ein erster Gehäusespalt 14 vorgesehen.

Im Wesentlichen auf dieselbe Weise erstreckt sich von der in Figur 1 rechts gelegenen Seite des Kolbenbodens 21 eine zweite Kolbenstange 7 durch eine zweite Gehäuseöffnung 9 hindurch. Die zweite Kolbenstange 7 hat einen Durchmesser d1.

Durch eine geeignete Wahl der Durchmesser d1 und d2 kann über eine Variation der sich jeweils ergebenden Stirnflächen s1 und s2 des Dämpfungskolbens 4 eine gewünschte Charakteristik des Kettenspanners 17 eingestellt werden. Insofern wird auf die US 5 993 339 verwiesen. Gemäß der Erfindung sind die beiden Stirnflächen aber möglichst gleich groß zu halten und ein Spalt 5 zwischen Dämpfungskolben 4 und Zylinderbohrung 2 ist möglichst klein zu halten.

Das Zylindergehäuse 1 weist noch eine erste Ölzuführbohrung 13 zur Zufuhr von Drucköl zum Abschnitt 2b und eine zweite Ölzuführbohrung 22 zu einem Abschnitt 2a auf. Die beiden Ölzuführbohrungen 13 und 22 stehen über einen ersten Verbindungskanal 23 auf der Außenseite des Zylindergehäuses 1 miteinander in Verbindung. Der erste Verbindungskanal 23 ist dabei als axial im Zylindergehäuse 1 verlaufender Gehäusekanal ausgebildet, der von einem Bereich, in dem die zweite Zuführbohrung 22 nach außen mündet in einen anderem Bereich verläuft, in dem die erste Ölzuführbohrung 13 nach außen mündet.

Außerdem ist ein zweiter Verbindungskanal 24 vorgesehen, um die beiden Abschnitte 2a und 2b miteinander zu verbinden. Der zweite Verbindungskanal 24 verläuft auf der Mantelfläche der Zylinderbohrung 2. Etwa in der Mitte des zweiten Verbindungskanals 24 ist eine Verschlussschraube 25 mit einer Kontermutter 26 seitlich in das Zylindergehäuse 1 geführt. Die Verschlussschraube 25 ist dabei so ausgestaltet, dass der zweite Verbindungskanal 24 in seinem Querschnitt verengt werden kann.

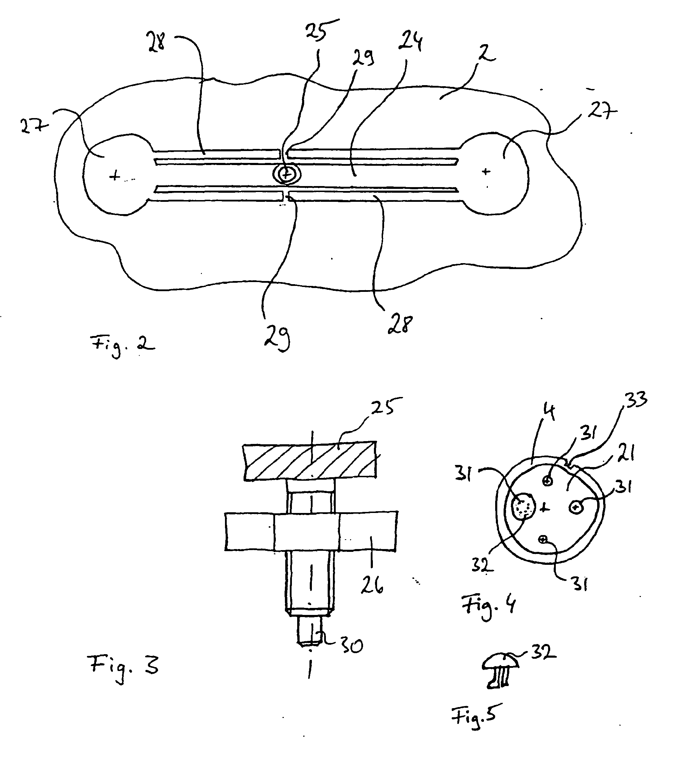

Figur 2 zeigt den zweiten Verbindungskanal 24 in näherem Detail. Wie man in dieser Ansicht besonders gut sieht, mündet der zweite Verbindungskanal 24 in je einen Austrittsabschnitt 27 mit kreisförmigem Querschnitt. Zu beiden Seiten des Verbindungskanals 24 ist je ein Zusatzkanal 28 angeordnet, der mittig durch einen Steg 29 verschlossen ist. Die Stege 29 des aus Aluminiumdruckgussmaterial hergestellten Zylindergehäuses 1 können bei Bedarf einfach mit einem Schraubenzieher entfernt werden, so dass die Zusatzkanäle 28 den Strömungsquerschnitt des zweiten Verbindungskanals 24 erweitern.

Figur 3 zeigt die Verschlussschraube 25 mit der Kontermutter 26 in näherem Detail. Wie man in dieser Ansicht besonders gut sieht, ist an der Unterseite der Verschlussschraube 25 ein Verschlussbolzenabschnitt 37 vorgesehen, der gegebenenfalls im zweiten Verbindungskanal 24 eingedreht werden kann.

Wie man besonders gut in Figur 1 und in Figur 4 sieht, weist der Dämpfungskolben 4 dritte Verbindungskanäle 31 auf, die als Durchbrüche im Kolbenboden 21 vorgesehen sind. Wie man besonders gut in Figur 4 und in Figur 5 sieht, ist dabei einer der dritten Verbindungskanäle 31 mit einem Verschlussstopfen 32 aus Kunststoff verschlossen.

Wie man besonders gut in Figur 1 und in Figur 4 sieht, weist der Dämpfungskolben 4 noch einen vierten Verbindungskanal 33 auf, der als Axialkanal auf der Mantelfläche des Dämpfungskolbens 4 ausgebildet ist.

In einem weiteren, hier nicht gezeigten Ausführungsbeispiel sind mehrere solcher vierter Verbindungskanäle 34 auf der Mantelfläche des Dämpfungskolbens 33 vorgesehen.

Das Zylindergehäuse 1 ist an einem bearbeiteten Abschnitt 34 des Gehäuseteils 18 vorgesehen. Dort mündet eine Ölanschlussbohrung 35 in ein Rückschlagventil 16, das auch das Leerlaufen des Zylindergehäuses 1 verhindert, wenn der Verbrennungsmotor abgestellt ist. Das Rückschlagventil 16 mündet dabei in die erste Ölzuführbohrung 13.

Im Bereich des bearbeiteten Abschnitts 34 ist ein Magnetventil 36 angeordnet. Das Magnetventil 36 weist einen unter Federvorspannung befindlichen Kolben 37 auf, der so ausgebildet ist, dass mit ihm der erste Verbindungskanal 23 verschließbar ist. Zur Betätigung des Magnetventils 36 sind dabei Anschlussleitungen 38 vorhanden.

Das Zylindergehäuse 1 wird mit Befestigungsschrauben 39 am Gehäuseteil 18 befestigt.

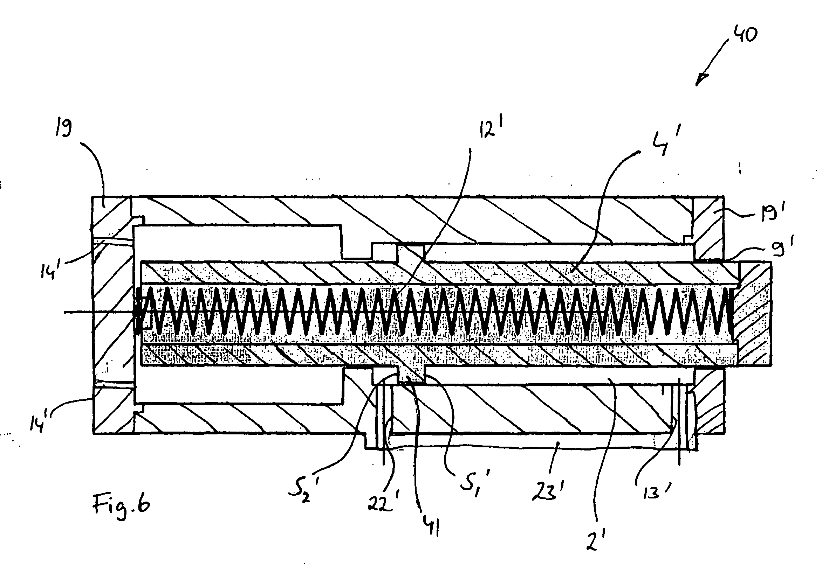

Figur 6 zeigt einen Querschnitt durch eine weitere erfindungsgemäße Kettenspanneinrichtung 40. Die Kettenspanneinrichtung 40 entspricht in weiten Teilen der Kettenspanneinrichtung 17 aus Figur 1. Teile mit ähnlichen Funktionen haben daher dieselben Bezugsziffern, versehen mit einem Apostroph.

Bei der Kettenspanneinrichtung 40 entfallen jegliche Kolbenstangen, weil der Dämpfungskolben 4' durch die zweite Gehäuseöffnung 9' unmittelbar ins Freie geführt ist. Die beiden Stirnflächen s1' und s2' werden durch einen ringförmigen Absatz 41 auf der ersten Seite des Dämpfungskolbens 4 gebildet.

Die Erfindung stellt einen Kettenspanner bereit, der eine von der Motordrehzahl und Temperatur unabhängige Spannkraft aufbringt und der gleichzeitig gute Dämpfungseigenschaften aufweist. Durch den Verbindungskanal stellt sich eine gut vorgebbare hydraulische Dämpfung ein. Die Spannkraft ist von der durch den Öldruck aufgebrachten Kraft unabhängig. Die Kennlinie der Spannfeder 12 wird so eingestellt, dass sie möglichst flach ist. Die hohle Ausgestaltung des Dämpfungskolbens 4 bzw. 4' stellt einen langen Bauraum für die Spannfeder 12 bereit. Bei der Erfindung wird die Dämpfung des Dämpfungskolbens 4 bzw. 4' hydraulisch durch das Strömen von Öl durch enge Querschnitte erzeugt, wie es von einem Stoßdämpfer bekannt ist. Im Gegensatz zur Reibungsdämpfung tritt keine Funktionsbeeinträchtigung durch Verschleiß auf. Der Kolben des Kettenspanners ist innen hohl ausgeführt, so dass dessen ganze Länge zur Aufnahme der Spannfeder genutzt werden kann. Die erwünschte hydraulische Dämpfung wird durch den erfindungsgemäßen Verbindungskanal bewirkt. Die Ölbefüllung wird durch die Ölzuführbohrungen sichergestellt, die mit dem Motorölkreis in Verbindung stehen. Die Ölzuführbohrungen werden durch einen "Borkenkäferkanal" bzw. durch eine Rinne, die durch ein anderes Bauteil abgedeckt werden kann, im Spanner oder im Zylinderkopf versorgt. Der Grad der Dämpfung kann durch das Spiel an Dämpfungskolben, durch den Durchmesser der Ölzuführbohrungen oder auch durch Nuten am Dämpfungskolben oder am Zylindergehäuse eingestellt werden. Die ölbeaufschlagten Flächen auf beiden Seiten des Dämpfungskolbens sind vorzugsweise gleich groß, so dass die Spannkraft des Kettenspanners im Wesentlichen von der Öltemperatur abhängig ist. Der Dämpfungskolben ist im Zylindergehäuse und im Gehäusedeckel geführt oder, wenn dies vorteilhafter ist, im Gehäuse durch seine äußere Mantelfläche. Die Spannfeder wird an einem Federhalter durch eine Einsenkung seitlich geführt. Die Einsenkung kann vorteilhafterweise zusammen mit der Zylinderbohrung gefertigt werden. Ersatzweise kann zur Federführung auch ein Stift eingepresst werden. Der Gehäusedeckel kann auf das Gehäuse auf- oder eingepresst oder auch geschraubt werden.

Durch die Ölführung im "Borkenkäferkanal" ist es leicht möglich, weitere Elemente in den Ölkreislauf des Kettenspanners zu integrieren. So können nicht nur ein Rückschlagventil in der Ölzufuhr positioniert werden, das auch koaxial neben den Kolben angeordnet werden kann, um ein Leerlaufen des Spanners bei Motorstillstand zu verhindern. Es ist auch möglich, die Dämpfung in beiden Richtungen unterschiedlich auszulegen, auch unter Verwendung von aktiven Elementen. Hierfür bieten sich Druckbegrenzungsventile, Rückschlagventile, Bimetallelemente oder auch Wachselemente zum Temperaturausgleich an. Auch elektromagnetisch betätigte Ventile können hierzu vorgesehen sein.

Die Erfindung stellt einen Kettenspanner bereit, der auch beim Start, wenn noch kein Öldruck anliegt, die volle Spannkraft erzeugt, so dass die Steuerkette ruhig läuft. Die Anordnung der einzelnen Funktionselemente erlaubt eine große Federlänge, die eine flache Federkernlinie ermöglicht. Die Kettenspannung auch bei gelenkten Ketten fällt damit nicht unzulässig ab. Ebenso ist die Spannung auch bei noch nicht gelenkter Kette nicht zu hoch. Die Dämpfung ist durch die verschiedenen oben beschriebenen Maßnahmen sehr flexibel einstellbar. Für die Entwicklung des Kettentriebs ist dabei vorteilhaft, dass die Dämpfungscharakteristik für Versuche leicht angepasst werden kann. Die Dämpfung erfolgt ohne mechanische Reibung, somit sind keine Verschleißprobleme zu befürchten.

### Bezugszeichenliste

- 1: Zylindergehäuse
- 2: Zylinderbohrung
- 2a: Abschnitt
- 2b: Abschnitt
- 4: Dämpfungskolben
- 5: Spalt
- 6: Erste Kolbenstange
- 7: Zweite Kolbenstange
- 8: Erste Gehäuseöffnung
- 9: Zweite Gehäuseöffnung
- 12: Spannfeder
- 13: Erste Ölzuführbohrung
- 14: Erster Gehäusespalt
- 16: Rückschlagventil
- 17: Kettenspanner
- 18: Gehäuseteil
- 19: Verschlussdeckel
- 20: Verschlussschraube
- 21: Kolbenboden
- 22: Zweite Ölzuführbohrung
- 23: Erster Verbindungskanal
- 24: Zweiter Verbindungskanal
- 25: Verschlussschraube
- 26: Kontermutter
- 27: Austrittsabschnitt
- 28: Zusatzkanal
- 29: Steg
- 30: Verschlussbolzenabschnitt
- 31: Dritter Verbindungskanal
- 32: Verschlussstopfen
- 33: Vierter Verbindungskanal
- 34: Bearbeiteter Abschnitt
- 35: Ölanschlussbohrung
- 36: Magnetventil
- 37: Kolben
- 38: Anschlussleitung
- 39: Befestigungsschraube
- 40: Kettenspanner
- 41: Absatz
- s1: Stirnfläche
- s2: Stirnfläche

## Patentansprüche

1. Kettenspanneinrichtung (17; 40) für die Steuerkette eines Verbrennungsmotors, wobei die Kettenspanneinrichtung (17; 40) die folgenden Merkmale aufweist:
- ein Zylindergehäuse (1; 1') mit einem Zylinder (2; 2') zur Aufnahme eines Dämpfungskolbens (4; 4'),
- der Dämpfungskolben (4; 4') ragt auf die Außenseite des Zylindergehäuses (1; 1'),
- zwischen einer Seite des Dämpfungskolbens (4; 4') und dem Zylindergehäuse (1; 1') ist eine Spannfeder (12; 12') vorgesehen,
- das Zylindergehäuse (1; 1') weist wenigstens eine Ölzuführbohrung (13, 22) zur Verbindung mit einem Druckölanschluss (35) des Verbrennungsmotors auf,
- zur Verbindung der beiden durch den Dämpfungskolben (4; 4') voneinander getrennten Seiten des Zylindergehäuses (1; 1') ist wenigstens ein Verbindungskanal (31) vorgesehen, **dadurch gekennzeichnet, dass** der Verbindungskanal (31) als Durchbruch (31) in einem Kolbenboden (21) des Dämpfungskolbens (4) ausgebildet ist, und, dass
- ein Verschlusselement (32) in dem Verbindungskanal (31) vorgesehen ist.

2. Kettenspanneinrichtung (17; 40) für die Steuerkette eines Verbrennungsmotors, wobei die Kettenspanneinrichtung (17; 40) die folgenden Merkmale aufweist:
- ein Zylindergehäuse (1; 1') mit einem Zylinder (2; 2') zur Aufnahme eines Dämpfungskolbens (4; 4'),
- der Dämpfungskolben (4; 4') ragt auf die Außenseite des Zylindergehäuses (1; 1'),
- zwischen einer Seite des Dämpfungskolbens (4; 4') und dem Zylindergehäuse (1; 1') ist eine Spannfeder (12; 12') vorgesehen,
- das Zylindergehäuse (1; 1') weist wenigstens eine Ölzuführbohrung (13, 22) zur Verbindung mit einem Druckölanschluss (35) des Verbrennungsmotors auf,
- zur Verbindung der beiden durch den Dämpfungskolben (4; 4') voneinander getrennten Seiten des Zylindergehäuses (1; 1') ist wenigstens ein im Zylindergehäuse (1; 1') verlaufender Verbindungskanal (28) vorgesehen, **dadurch gekennzeichnet, dass**
- der Verbindungskanal (28) einen Verschlusssteg (29) aufweist

3. Kettenspanneinrichtung (17; 40) für die Steuerkette eines Verbrennungsmotors, wobei die Kettenspanneinrichtung (17; 40) die folgenden Merkmale aufweist:
- ein Zylindergehäuse (1; 1') mit einem Zylinder (2; 2') zur Aufnahme eines Dämpfungskolbens (4; 4'),
- der Dämpfungskolben (4; 4') ragt auf die Außenseite des Zylindergehäuses (1; 1'),
- zwischen einer Seite des Dämpfungskolbens (4; 4') und dem Zylindergehäuse (1; 1') ist eine Spannfeder (12; 12') vorgesehen,
- das Zylindergehäuse (1; 1') weist wenigstens eine Ölzuführbohrung (13, 22) zur Verbindung mit einem Druckölanschluss (35) des Verbrennungsmotors auf,
- zur Verbindung der beiden durch den Dämpfungskolben (4; 4') voneinander getrennten Seiten des Zylindergehäuses (1; 1') ist wenigstens ein im Zylindergehäuse (1; 1') verlaufender Verbindungskanal (23, 24) vorgesehen, **dadurch gekennzeichnet, dass**
- im Bereich des Verbindungskanals (23; 24) ein betätigbares Verschlusselement (36; 25) vorgesehen ist.

4. Kettenspanneinrichtung nach Anspruch 3, **dadurch gekennzeichnet, dass** das Verschlusselement als Magnetventil (36) ausgebildet ist.

5. Kettenspanneinrichtung nach Anspruch 3, **dadurch gekennzeichnet, dass** das Verschlusselement eine manuell betätigbare Verschlussschraube (25) aufweist.

6. Kettenspanneinrichtung nach einem der Ansprüche 2 bis 5, **dadurch gekennzeichnet, dass** der Verbindungskanal auf der äußeren Mantelfläche des Dämpfungskolbens (4) von einer Stirnfläche (S1) zur anderen Stirnfläche (S2) verlaufender Axialkanal (33) ausgebildet ist.

7. Kettenspanneinrichtung nach einem der Ansprüche 2 bis 5, **dadurch gekennzeichnet, dass** der Verbindungskanal als auf der inneren Mantelfläche des des Zylindergehäuses (1) verlaufender Axialkanal (24) ausgebildet ist.

8. Kettenspanneinrichtung nach einem der Ansprüche 2 bis 5, **dadurch gekennzeichnet, dass** der Verbindungskanal als auf einer Montagefläche des Zylindergehäuses (1; 1') verlaufender Axialkanal (23; 23') ausgebildet ist.

9. Kettenspanneinrichtung nach einem der vorhergehenden Ansprüche, **dadurch gekennzeichnet, dass** im Bereich der Ölzuführbohrung (13) ein Rückschlagventil (16) vorgesehen ist.

10. Kettenspanneinrichtung nach einem der vorhergehenden Ansprüche, **dadurch gekennzeichnet, dass** der Dämpfungskolben (4; 4') und/oder das Zylindergehäuse (1; 1') in einem Aluminiumdruckgussverfahren gefertigt sind.

11. Verbrennungsmotor mit einer Steuerkette und mit einem im Bereich der Steuerkette vorgesehenen Kettenspanner nach einem der vorhergehenden Ansprüche.

12. Kraftfahrzeug mit einem Verbrennungsmotor nach Anspruch 11.

## Claims

1. A chain tensioning device (17; 40) for the timing chain of an internal combustion engine, with the chain tensioning device (17; 40) having the following features:
- a cylinder housing (1; 1') with a cylinder (2; 2') for accommodating a damping piston (4; 4');
- the damping piston (4; 4') protrudes to the outside of the cylinder housing (1; 1');
- a tension spring (12; 12') is provided between one side of the damping piston (4; 4') and the cylinder housing (1; 1');
- the cylinder housing (1; 1') comprises at least one oil feed hole (13, 22) for connection with a compressed-oil connection (35) of the internal combustion engine;
- at least one connecting passage (31) is provided for connecting the two sides of the cylinder housing (1; 1') which are separated from one another by the damping piston (4; 4'), **characterized in that** the connecting passage (31) is arranged as a breakthrough (31) in a piston crown (21) of the damping piston (4) and
- a sealing element (32) is provided in the connecting passage (31).

2. A chain tensioning device (17; 40) for the timing chain of an internal combustion engine, with the chain tensioning device (17; 40) having the following features:
- a cylinder housing (1; 1') with a cylinder (2; 2') for accommodating a damping piston (4; 4');
- the damping piston (4; 4') protrudes to the outside of the cylinder housing (1; 1');
- a tension spring (12; 12') is provided between one side of the damping piston (4; 4') and the cylinder housing (1; 1');
- the cylinder housing (1; 1') comprises at least one oil feed hole (13, 22) for connection with a compressed-oil connection (35) of the internal combustion engine;
- at least one connecting passage (28) extending in the cylinder housing (1; 1') is provided for connecting the two sides of the cylinder housing (1; 1') which are separated from one another by the damping piston (4; 4'), **characterized in that** the connecting passage (28) comprises a sealing web (29).

3. A chain tensioning device (17; 40) for the timing chain of an internal combustion engine, with the chain tensioning device (17; 40) having the following features:
- a cylinder housing (1; 1') with a cylinder (2; 2') for accommodating a damping piston (4; 4');
- the damping piston (4; 4') protrudes to the outside of the cylinder housing (1; 1');
- a tension spring (12; 12') is provided between one side of the damping piston (4; 4') and the cylinder housing (1; 1');
- the cylinder housing (1; 1') comprises at least one oil feed hole (13, 22) for connection with a compressed-oil connection (35) of the internal combustion engine;
- at least one connecting passage (23, 24) extending in the cylinder housing (1; 1') is provided for connecting the two sides of the cylinder housing (1; 1') which are separated from one another by the damping piston (4; 4'),
**characterized in that**
- a sealing element (36; 25) that can be actuated is provided in the region of the connecting passage (23; 24).

4. A chain tensioning device according to claim 3, **characterized in that** the sealing element is arranged as a solenoid valve (36).

5. A chain tensioning device according to claim 3, **characterized in that** the sealing element comprises a screw plug (25) which can be actuated manually.

6. A chain tensioning device according to one of the claims 2 to 5, **characterized in that** the connecting passage on the outside jacket surface of the damping piston (4) is arranged as an axial passage (33) extending from one face surface (S1) to the other face surface (S2).

7. A chain tensioning device according to one of the claims 2 to 5, **characterized in that** the connecting passage as arranged as an axial passage (24) extending on the inner jacket surface cylinder housing (1).

8. A chain tensioning device according to one of the claims 2 to 5, **characterized in that** the connecting passage is arranged as an axial passage (23; 23') extending on the mounting surface of the cylinder housing (1; 1').

9. A chain tensioning device according to one of the preceding claims, **characterized in that** a non-return valve (16) is provided in the region of the oil feed hole (13).

10. A chain tensioning device according to one of the preceding claims, **characterized in that** the damping piston (4; 4') and/or the cylinder housing (1; 1') are made in an aluminum die casting process.

11. An internal combustion engine, comprising a timing chain and a chain tensioner according to one of the preceding claims which is provided in the region of the timing chain.

12. A motor vehicle with an internal combustion engine according to claim 11.

## Revendications

1. Dispositif tendeur de chaîne (17 ; 40) pour la chaîne de distribution d'un moteur à combustion interne, lequel dispositif tendeur de chaîne (17 ; 40) présente les caractéristiques suivantes :
- un logement cylindrique (1 ; 1') avec un cylindre (2 ; 2') destiné à recevoir un piston d'amortissement (4 ; 4'),
- le piston d'amortissement (4 ; 4') dépasse sur la face extérieure du logement cylindrique (1 ; 1'),
- un ressort tendeur (12 ; 12') est prévu entre un côté du piston d'amortissement (4 ; 4') et le logement cylindrique (1 ; 1') ;
- le logement cylindrique (1 ; 1') présente au moins un alésage d'arrivée d'huile (13, 22) destiné à être relié à un raccord d'huile sous pression (35) du moteur à combustion interne ;
- il est prévu pour faire communiquer les côtés du logement cylindrique (1 ; 1') séparés par le piston d'amortissement (4 ; 4') au moins un canal de communication (31) ;
**caractérisé en ce que** le canal de communication (31) est conformé comme une traversée (31) dans un fond de piston (21) du piston d'amortissement (4), et **en ce que**
- il est prévu un élément obturateur (32) dans le canal de communication (31).

2. Dispositif tendeur de chaîne (17 ; 40) pour la chaîne de distribution d'un moteur à combustion interne, lequel dispositif tendeur de chaîne (17 ; 40) présente les caractéristiques suivantes :
- un logement cylindrique (1 ; 1') avec un cylindre (2 ; 2') destiné à recevoir un piston d'amortissement (4 ; 4'),
- le piston d'amortissement (4 ; 4') dépasse sur la face extérieure du logement cylindrique (1 ; 1'),
- un ressort tendeur (12 ; 12') est prévu entre un côté du piston d'amortissement (4 ; 4') et le logement cylindrique (1 ; 1') ;
- le logement cylindrique (1 ; 1') présente au moins un alésage d'arrivée d'huile (13, 22) destiné à être relié à un raccord d'huile sous pression (35) du moteur à combustion interne ;
- il est prévu pour faire communiquer les côtés du logement cylindrique (1 ; 1') séparés par le piston d'amortissement (4 ; 4') au moins un canal de communication (28) passant dans le logement cylindrique (1 ; 1'),
**caractérisé en ce que** le canal de communication (28) présente une barrette d'obturation (29).

3. Dispositif tendeur de chaîne (17 ; 40) pour la chaîne de distribution d'un moteur à combustion interne, lequel dispositif tendeur de chaîne (17 ; 40) présente les caractéristiques suivantes :
- un logement cylindrique (1 ; 1') avec un cylindre (2 ; 2') destiné à recevoir un piston d'amortissement (4 ; 4') ;
- le piston d'amortissement (4 ; 4') dépasse sur la face extérieure du logement cylindrique (1 ; 1'),
- un ressort tendeur (12 ; 12') est prévu entre un côté du piston d'amortissement (4 ; 4') et le logement cylindrique (1 ; 1') ;
- le logement cylindrique (1 ; 1') présente au moins un alésage d'arrivée d'huile (13, 22) destiné à être relié à un raccord d'huile sous pression (35) du moteur à combustion interne ;
- il est prévu pour faire communiquer les côtés du logement cylindrique (1 ; 1') séparés par le piston d'amortissement (4 ; 4') au moins un canal de communication (23, 24) passant dans le logement cylindrique (1 ; 1'),
**caractérisé en ce qu'**un élément d'obturation (36 ; 25) pouvant être actionné est prévu au niveau du canal de communication (23 ; 24).

4. Dispositif tendeur de chaîne selon la revendication 3, **caractérisé en ce que** l'élément obturateur est conformé comme une vanne à solénoïde (36).

5. Dispositif tendeur de chaîne selon la revendication 3, **caractérisé en ce que** l'élément obturateur présente une vis d'obturation (25) à actionnement manuel.

6. Dispositif tendeur de chaîne selon l'une des revendications 2 à 5, **caractérisé en ce que** le canal de communication est un canal axial (33) courant sur la surface d'enveloppe extérieure du piston d'amortissement (4) d'une face d'extrémité (S1) à l'autre face d'extrémité (S2).

7. Dispositif tendeur de chaîne selon l'une des revendications 2 à 5, **caractérisé en ce que** le canal de communication est conformé comme un canal axial (24) courant sur la surface d'enveloppe intérieure du logement cylindrique (1)

8. Dispositif tendeur de chaîne selon l'une des revendications 2 à 5, **caractérisé en ce que** le canal de communication est un canal axial (23 ; 23') formé sur une surface de montage du logement cylindrique (1 ; 1').

9. Dispositif tendeur de chaîne selon l'une des revendications précédentes, **caractérisé en ce qu'**une soupape anti-retour (16) est prévue au niveau de l'alésage d'arrivée d'huile (13).

10. Dispositif tendeur de chaîne selon l'une des revendications précédentes, **caractérisé en ce que** le piston d'amortissement (4 ; 4') et/ou le logement cylindrique (1 ; 1') sont fabriqués selon un procédé de coulée d'aluminium sous pression.

11. Moteur à combustion interne avec une chaîne de distribution et avec un tendeur de chaîne selon l'une des revendications précédentes prévu au niveau de la chaîne de distribution.

12. Véhicule à moteur avec un moteur à combustion interne selon la revendication 11.
